# EUROPÄISCHE PATENTANMELDUNG

(11) **EP 2 671 715 A1**
(43) Veröffentlichungstag der Anmeldung: **11.12.2013**
(21) Anmeldenummer: 12170875.4
(22) Anmeldetag: 05.06.2012
(51) Int. Cl.: B32B 3/12, B32B 27/12, B65D 81/26, B65D 81/34

(54) **Mikrowellenverpackung für Lebensmittel**

(71) Anmelder: Nordenia Technologies GmbH, 48599 Gronau (DE)
(72) Erfinder: Wewers, Klaus, 48683 Ahaus (DE); Hach, Maik, Cape Girardeau, MO 63701 (US)
(74) Vertreter: Albrecht, Rainer Harald

(57) **Zusammenfassung**

Die Erfindung betrifft eine Mikrowellenverpackung für Lebensmittel mit einer für Mikrowellenstrahlen durchlässigen Verpackungshülle (1) und einer flüssigkeitsabsorbierenden Einlage (2). Erfindungsgemäß umfasst die Einlage (2) an ihrer Unterseite einen Folienträger (6), eine auf dem Folienträger (6) angeordnete Gitterstruktur (7) aus einem elektrisch leitfähigen Material und über der Gitterstruktur (7) eine Absorberschicht (8) zur Aufnahme von Flüssigkeit. - Zu ver-öffentlichen mit Fig. 1

## Beschreibung

Die Erfindung betrifft eine Mikrowellenverpackung für Lebensmittel mit einer für Mikrowellenstrahlen durchlässigen Verpackungshülle und einer flüssigkeitsabsorbierenden Einlage, die mit ihrer Unterseite an der Verpackungshülle anliegt und an ihrer Oberseite eine gas- und flüssigkeitsdurchlässige Auflagefläche für ein durch Mikrowellenstrahlen zu erwärmendes Lebensmittel aufweist. Eine solche Verpackung ist aus US 7 141 770 B2 bekannt.

Mikrowellenöfen bieten die Möglichkeit Lebensmittel, z. B. Fertigprodukte, schnell zu erwärmen. Im Gegensatz zu konventionellen Öfen wird die Energie dabei nicht durch Strahlung und Konvektion eines umgebenden Mediums (z. B. Luft) in die Speisen eingebracht. Stattdessen regt ein elektromagnetisches Wechselfeld Wassermoleküle zu Schwingungen an. Dies ist keinesfalls auf die Oberfläche beschränkt, sondern geschieht überall dort, wo die Strahlung in das zu erwärmende Lebensmittel eindringt. Da die Strahlungsintensität in einem Mikrowellenofen lokal sehr unterschiedlich sein kann, führt dies zu einem Ergebnis, dass sich deutlich von dem einer konventionellen Erwärmung unterscheidet. So kommt es vor, dass sich einige Stellen lokal sehr stark erhitzen, so dass sie in hohem Maße die enthaltende Feuchtigkeit verlieren, während andere Stelle vergleichsweise kühl bleiben. Schlägt sich die entwichene Feuchtigkeit an der Oberfläche des Lebensmittels nieder oder kondensiert sie an der Außenverpackung und tropft anschließend auf das Lebensmittel, so kann sie z. B. die Kruste oder Panade des Lebensmittels aufweichen oder dessen Geschmack, Konsistenz oder Erscheinungsbild anderweitig beeinträchtigen. Unterdessen trocknet das innere des Lebensmittels aus. Um diese Effekte zumindest teilweise einzudämmen, lehrt die US 7 141 770 B2 eine flüssigkeitsabsorbierende Einlage zu verwenden, die Feuchtigkeit, Fett, Öl und andere vom Lebensmittel ausgeschiedene Flüssigkeiten aufnehmen kann. Die Auflage umfasst dabei eine Funktionsschicht, welche die Absorptionseigenschaften trägt, und eine Deckschicht, durch die die Funktionsschicht vom Verpackungsinhalt getrennt wird, und die sich nach dem Erwärmen leicht von der erwärmten Speise lösen lässt.

Aus US 7 610 408 ist ein mehrschichtiges Verbundmaterial für Mikrowellenverpackungen bekannt, welches eine Absorberschicht zur Aufnahme von Flüssigkeit und außerdem eine in einem Muster applizierte Schicht aus einem Suszeptormaterial aufweist. Das Suszeptormaterial wird durch die Mikrowellenstrahlung stark erwärmt und gibt Wärme konvektiv und als Strahlungswärme ab. Das Lebensmittel wird dabei indirekt wie in einem konventionellen Ofen erwärmt. Durch die indirekte Wärmezufuhr sinkt jedoch die Effizienz und die benötigte Zubereitungszeit wächst.

Die US 12/804,231 offenbart ein Verbundmaterial für Mikrowellenverpackungen, dessen Schichtenaufbau einen Folienträger, eine darauf angeordnete Gitterstruktur und über dem Gitter eine Absorberschicht aufweist. Die aus einem elektrisch leitenden Material bestehende Gitterstruktur reflektiert Mikrowellen, ohne erwärmt zu werden. Durch die Gitterstruktur verteilt sich die Heizleistung des Mikrowellenofens gleichmäßiger über das zu erwärmende Lebensmittel, was zu einer homogeneren Erwärmung bei unverminderter Heizleistung führt. Das Reflektorgitter schränkt jedoch die Verarbeitungsmöglichkeiten des Verbundmaterials ein. Eine starke Verformung des Materials, wie sie bei Tiefziehprozessen üblich ist, ist zu vermeiden, denn bei einer Verformung besteht die Gefahr, dass die Geometrie des Gitters verzerrt wird und das wegen unterschiedlicher elastischer Eigenschaften von Kunststoff und Metall eine durchgängige Leitfähigkeit des Gitters sowie eine einheitliche definierte Stärke der Metallschicht nicht immer gewährleistet ist. Darüber hinaus lässt sich absorbierendes Material nur in begrenzter Menge in die Umverpackung einbringen. Besonders große Mengen an Feuchtigkeit können nicht aufgefangen werden.

Vor diesem Hintergrund liegt der Erfindung die Aufgabe zugrunde, eine Mikrowellenverpackung für Lebensmittel anzugeben, die eine gleichmäßige, schnelle und effiziente Erwärmung des Lebensmittels in einem Mikrowellenofen ermöglicht, ohne dass das Lebensmittel an der Außenseite durch Feuchtigkeit beeinträchtigt wird oder innen austrocknet.

Gegenstand der Erfindung und Lösung dieser Aufgabe ist eine Mikrowellenverpackung für Lebensmittel nach Anspruch 1.

Die erfindungsgemäße Mikrowellenverpackung beinhaltet eine flüssigkeitsabsorbierende Einlage, die an ihrer Unterseite einen Folienträger, eine auf dem Folienträger angeordnete Gitterstruktur aus einem elektrisch leitfähigen Material und über der Gitterstruktur eine Absorberschicht zur Aufnahme von Flüssigkeit aufweist. Die erfindungsgemäße Einlage ermöglicht es, in eine beliebig geformte Verpackung ein auf das Lebensmittel bezüglich Form und Größe abgestimmtes Absorptionselement von ausreichender Dicke sowie auch ein Gitter zur zielgerichteten Verteilung der Mikrowellenenergie einzubringen. Die erfindungsgemäß ausgebildete Einlage eignet sich daher sowohl für Beutelverpackungen als auch für Verpackungen, die eine durch Tiefziehen geformte Schale aufweisen. Durch die Beschränkung des Gitters auf die dem Lebensmittel nahegelegene Einlage wird z. B. auch vermieden, dass das Mikrowellenfeld an den Rändern der Verpackung deformiert bzw. gestört wird.

Vorzugsweise hat die Absorberschicht für Flüssigkeiten eine Aufnahmekapazität von zumindest 0,5 kg/m², in einem besonders bevorzugten Fall von mehr als 1 kg/m² jeweils gemessen für Wasser. In einer bevorzugten Ausführung besteht die Absorberschicht aus einem Vliesstoff bzw. Nonwoven aus Mikrofasern, wobei ein Flächengewicht von 100 bis 200 g/m² vorteilhaft ist. In einer anderen vorteilhaften Ausführung enthält die Absorberschicht superabsorbierende Polymersubstanzen, die in einer Polymermatrix oder mittels eines polymeren Bindemittels gebunden sind. Durch das Anordnen einer gas- und flüssigkeitsdurchlässigen Deckschicht auf der Absorberschicht wird eine Auflagefläche für das zu erwärmende Lebensmittel gebildet, welche einen direkten Kontakt zwischen dem Lebensmittel und dem Absorbermaterial verhindert. Zweckmäßigerweise besteht diese Deckschicht aus einer gas- und flüssigkeitsdurchlässigen Folie oder einem textilen Material. Bei der Verpackungshülle der Mikrowellenverpackung handelt es sich vorzugsweise um eine durch Tiefziehen einer Polymerfolie geformte Schale und eine auf die Schale aufgesiegelte polymere Abdeckfolie, wobei die flüssigkeitsabsorbierende Einlage in die Schale eingelegt wird.

Das erfindungsgemäß vorgesehen Metallgitter ist so ausgebildet, dass die Mikrowellenenergie nicht oder zumindest nicht wesentlich absorbiert, sondern gleichmäßig verteilt wird. Um eine nennenswerte Absorption zu vermeiden, ist die Schichtdicke größer als 1 µm, vorzugsweise mindestens 4 µm. Das Metallgitter kann auf einem Folienträger aufgedampft oder mit einer leitfähigen Druckfarbe aufgedruckt sein. Alternativ kann das Metallgitter auch durch Stanzen gebildet und mit dem Folienträger verklebt sein. Die Zellen des Gitters sind üblicherweise rechteckig, bevorzugt quadratisch oder im Wesentlichen quadratisch.

Im Folgenden wird die Erfindung anhand eines Ausführungsbeispiels erläutert. Es zeigen schematisch
- **Fig. 1**: eine aufgeschnittene perspektivische Ansicht einer Mikrowellenverpackung,
- **Fig. 2**: den Schnitt A-A aus Fig. 1,
- **Fig. 3**: die Draufsicht auf ein Mikrowellengitter der in Fig. 1 dargestellten Mikrowellenverpackung.

Die in den Figuren dargestellte Mikrowellenverpackung weist eine für Mikrowellenstrahlen durchlässige Verpackungshülle 1 und eine flüssigkeitsabsorbierende Einlage 2 auf. Die Einlage 2 liegt an ihrer Unterseite an der Verpackungshülle 1 an und weist an ihrer Oberseite eine gas- und flüssigkeitsdurchlässige Auflagefläche 3 für ein durch Mikrowellenstrahlen zu erwärmendes Lebensmittel auf. Der Übersicht halber ist das verpackte Lebensmittel nicht dargestellt worden. Die Verpackungshülle 1 besteht im Ausführungsbeispiel aus einer durch Tiefziehen einer Polymerfolie geformten Schale 4 und einer auf die Schale 4 aufgesiegelten polymeren Abdeckfolie 5. Die flüssigkeitsabsorbierende Einlage 2 ist in die Schale 4 eingelegt.

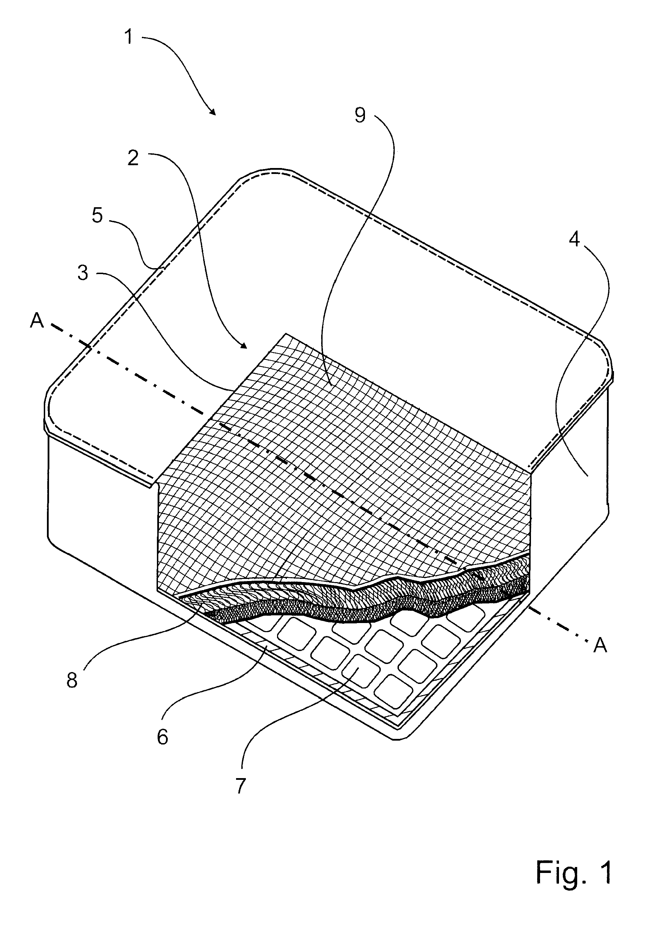

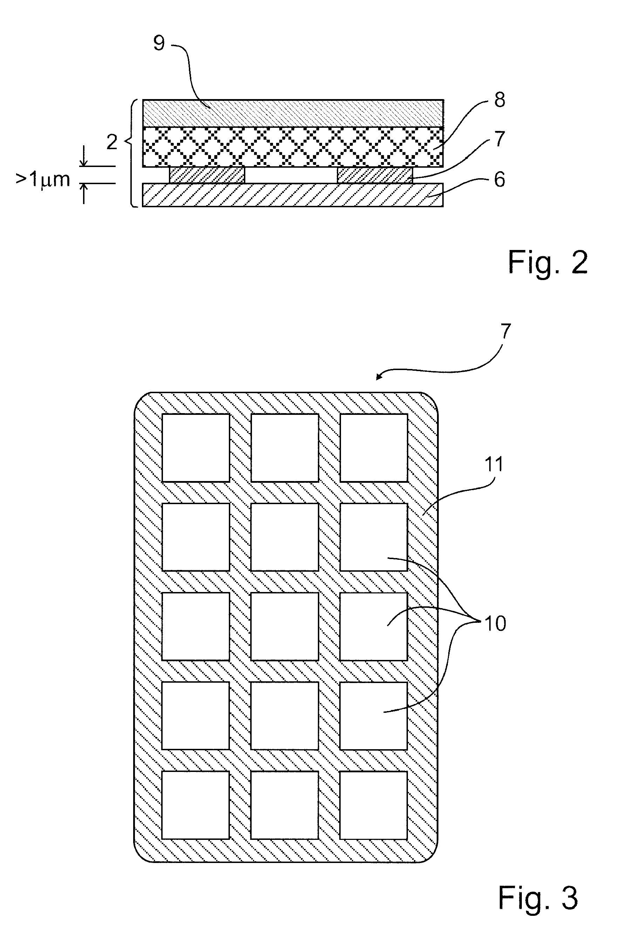

Einer vergleichenden Betrachtung der Fig. 1 und 2 entnimmt man, dass die flüssigkeitsabsorbierende Einlage 2 an ihrer Unterseite einen Folienträger 6, eine auf dem Folienträger 6 angeordnete Gitterstruktur 7 aus einem elektrisch leitfähigen Material und über der Gitterstruktur 7 eine Absorberschicht 8 zur Aufnahme von Flüssigkeit aufweist. Die Absorberschicht 8 hat eine Aufnahmekapazität für Flüssigkeit von vorzugsweise mehr als 1 kg/m², gemessen für Wasser. Die Absorberschicht 8 kann insbesondere aus einem Nonwoven aus Mikrofasern bestehen, wobei das Nonwoven zweckmäßig ein Flächengewicht von 100 bis 200 g/m² aufweist. Alternativ kann die Absorberschicht 8 auch superabsorbierende Polymersubstanzen enthalten, die in einer Polymermatrix oder mittels eines polymeren Bindemittels gebunden sind.

Auf der Absorberschicht 8 ist eine gas- und flüssigkeitsdurchlässige Deckschicht 9 angeordnet, welche die Auflagefläche 3 für das zu erwärmende Lebensmittel bildet. Die Deckschicht 9 kann aus einer gas- und flüssigkeitsdurchlässigen Folie oder einem textilen Material bestehen.

Gemäß der Darstellung in Fig. 3 besteht die Gitterstruktur 7 aus elektrisch nicht leitfähigen und Mikrowellen nicht absorbierenden Zellen 10, und einem die Zellen voneinander trennenden elektrisch leitfähigen Gitter 11. Das elektrisch leitfähige Material kann ein Metall, insbesondere Aluminium oder eine Aluminiumlegierung sein. Um eine Aufheizung des Gitters zu verhindern, ist eine Schichtdicke von zumindest 1 µm, vorzugsweise jedoch mindestens 4 bis 5 µm zu wählen. Damit die Mikrowellen von dem Gitter selbst nicht oder nur unwesentlich absorbiert werden, haben die Zellen 10 jeweils eine Fläche zwischen 100 mm² und 1200 mm²; ihr Anteil an der Gesamtfläche beträgt zumindest 50 %. Die Zellen 10 sind üblicherweise rechteckig, bevorzugt quadratisch oder im Wesentlichen quadratisch.

## Patentansprüche

1. Mikrowellenverpackung für Lebensmittel mit einer für Mikrowellenstrahlen durchlässigen Verpackungshülle (1) und einer flüssigkeitsabsorbierenden Einlage (2), die mit ihrer Unterseite an der Verpackungshülle anliegt und an ihrer Oberseite eine gas- und flüssigkeitsdurchlässige Auflagefläche (3) für ein durch Mikrowellenstrahlen zu erwärmendes Lebensmittel aufweist, **dadurch gekennzeichnet, dass** die flüssigkeitsabsorbierende Einlage (2) an ihrer Unterseite einen Folienträger (6), eine auf dem Folienträger angeordnete Gitterstruktur (7) aus einem elektrisch leitfähigen Material und über der Gitterstruktur eine Absorberschicht (8) zur Aufnahme von Flüssigkeit aufweist.

2. Mikrowellenverpackung nach Anspruch 1, **dadurch gekennzeichnet, dass** die Absorberschicht (8) eine Aufnahmekapazität für Flüssigkeit von mindestens 0,5 kg/m², vorzugsweise mehr als 1 kg/m², aufweist.

3. Mikrowellenverpackung nach Anspruch 1 oder 2, **dadurch gekennzeichnet, dass** die Absorberschicht (8) aus einem Nonwoven aus Mikrofasern besteht.

4. Mikrowellenverpackung nach Anspruch 3, **dadurch gekennzeichnet, dass** das Nonwoven ein Flächengewicht von 100 bis 200 g/m² aufweist.

5. Mikrowellenverpackung nach Anspruch 1 oder 2, **dadurch gekennzeichnet, dass** die Absorberschicht (8) superabsorbierende Polymersubstanzen enthält, die in einer Polymermatrix oder mittels eines polymeren Bindemittels gebunden sind.

6. Mikrowellenverpackung nach einem der Ansprüche 1 bis 5, **dadurch gekennzeichnet, dass** auf der Absorberschicht (8) eine gas- und flüssigkeitsdurchlässige Deckschicht (9) angeordnet ist, welche die Auflagefläche (3) für das zu erwärmende Lebensmittel bildet.

7. Mikrowellenverpackung nach Anspruch 6, **dadurch gekennzeichnet, dass** die Deckschicht (9) aus einer gas- und flüssigkeitsdurchlässigen Folie oder einem textilen Material besteht.

8. Mikrowellenverpackung nach einem der Ansprüche 1 bis 7, **dadurch gekennzeichnet, dass** die Verpackungshülle (1) aus einer durch Tiefziehen einer Polymerfolie geformten Schale (4) und einer auf die Schale (4) aufgesiegelten polymeren Abdeckfolie (5) besteht und dass die flüssigkeitsabsorbierende Einlage (2) in die Schale (4) eingelegt ist.

9. Mikrowellenverpackung nach einem der Ansprüche 1 bis 8, **dadurch gekennzeichnet, dass** die Gitterstruktur (7) elektrisch nicht leitfähige, und Mikrowellen nicht absorbierende Zellen (10) und ein die Zellen voneinander trennendes, elektrisch leitfähiges Gitter (11) mit einer Schichtdicke von zumindest 1 µm umfasst, wobei die Zellen (10) jeweils eine Fläche zwischen 100 mm² und 1200 mm² aufweisen und wobei der Anteil der von den Zellen (10) gebildeten nicht leitenden Fläche zumindest 50 % der Gesamtfläche der Gitterstruktur (7) beträgt.

10. Mikrowellenverpackung nach einem der Ansprüche 1 bis 9, **dadurch gekennzeichnet, dass** das elektrisch leitfähige Material der Gitterstruktur (7) ein Metall oder eine Metalllegierung ist.

11. Mikrowellenverpackung nach einem der Ansprüche 1 bis 10, **dadurch gekennzeichnet, dass** die Schichtdicke der Gitterstruktur (7) mindestens 4 µm beträgt.
